# EUROPEAN PATENT SPECIFICATION

(11) **EP 4 222 031 B1**
(45) Date of publication and mention of the grant of the patent: **12.06.2024**
(21) Application number: 21798103.4
(22) Date of filing: 29.09.2021
(51) Int. Cl.: B60T 11/16

(54) **PUMP FOR BRAKING SYSTEMS FOR VEHICLES, IN PARTICULAR GO-KARTS AND THE LIKE**
BREMSPUMPE FÜR FAHRZEUGE, INSBESONDERE FÜR GO-KARTS UND ÄHNLICHE FAHRZEUGE
POMPE DE FREIN POUR VÉHICULES, NOTAMMENT DU TYPE GO-KART OU SIMILAIRES

(30) Priority: 02.10.2020 IT 202000005536 U
(43) Date of publication of application: 09.08.2023
(73) Proprietor: C.R.G. S.r.l., 25017 Lonato del Garda (BS) (IT)
(72) Inventor: TININI, Giancarlo, 25017 Lonato del Garda (Brescia) (IT); PELIZZARI, Francesco, 25017 Lonato del Garda (Brescia) (IT)
(74) Representative: Tarabbia, Luigi
(86) International application number: PCT/IB2021/058934
(87) International publication number: WO 2022/070091

(56) References cited:
- WO-A1-2017/093891
- WO-A1-2019/229659
- CN-A- 103 950 442
- JP-A- 2015 505 770
- US-A1- 2019 023 251

## Description

The present invention relates to the sector of vehicles with braking systems, and in particular to so-called "go-karts"; in this technical field, the invention relates to a brake pump installable in the braking system of the aforesaid go-karts.

As is known, in the use of land vehicles on roads or tracks, it is often necessary to dissipate the accumulated speed (for example, to adjust the vehicle's arrangement and "energy" at the entrance to a curve or to avoid impacts or exits from the track) and such a functionality is ensured by the vehicle's on-board braking system: in turn, the braking system generally has one or more braking devices (to date, the so-called "disc brakes" are almost universally adopted) arranged on one or more wheel axles of the vehicle, and these braking devices are operated by hydraulic systems which can be more or less complex according to the different parameters of the vehicle (mass, "longitudinal and/or transverse grip" capacity and therefore of maximum braking power which can be discharged to the ground, desired performance envelope, tactile/sensory feedback sent to the driver of the vehicle and so on).

A fundamental part of braking systems is the so-called "brake pump", which is in fact an interface between the action of the driver of the vehicle and the actual braking devices: in particular, a brake pump transmits and multiplies the force impressed by the driver on the brake pedal to the actual brakes - typically, to the callipers working on the discs or to the jaws of the drum brakes - and therefore, determining the contact pressure between the brake "pads" (operated by the callipers or jaws) and the friction surface of the brake or brakes.

In go-kart type vehicles, the implementation of the braking systems can be made on a single axis or on both axes of the vehicle: generally, moreover, the braking systems of go-karts are not provided with servo-assist devices and therefore the brake pumps used in such systems must be dimensioned so as to allow the drivers of these vehicles to be able to exert a sufficient amount of pressure while ensuring a good "sensitivity" on the brake pedal.

Despite being made in different structural variations and being integrated into various types of systems, the known type of brake pumps nevertheless have some drawbacks. US 2019/023251 discloses a brake pump according to the state of the art: the pump has a pump body connectable to a braking system of a vehicle, a main actuation chamber, defining a main actuation volume having a fixed value, and a main slider movably engaged in said main actuation chamber.

In particular, the known type of brake pumps are made to generate a given hydraulic or pneumatic pressure "in output" (i.e., towards the callipers or brake jaws), and this pressure can be excessive as a function of different conditions of use (for example, the presence of water on the driving surface or the assembly of brake pads with a higher friction coefficient, or the need, during a competition, to preserve the tires from wear, which must withstand braking and so on) or more generally inadequate to the conditions of the moment.

Furthermore, although they may be provided with servo-support systems, the known type of brake pumps may become too bulky and complex from a structural point of view, and this strongly limits their installation and their integration into go-kart frames, which are extremely small/compact in terms of useful surface area and volume.

In the light of the aforementioned state of the art, the technical task of the present invention is to provide a brake pump usable on vehicles provided with a braking system active on at least one wheel axle, and in particular a brake pump usable on go-karts and similar vehicles which can overcome the drawbacks which have emerged.

An object of the present invention is, typically, to provide a brake pump which allows in a simple, reliable and ultra-compact manner to adjust the hydraulic or pneumatic pressure "in output", thus allowing the driver of the vehicle (for example, a go-kart) to perform the so-called "setting" of the braking system, adapting it to the most varied conditions of use.

A further object of the invention is to implement a brake pump which can work efficiently on a single wheel axle of a go-kart (or more generally of a vehicle), and which can be considerably low-cost as well as have a high degree of maintainability and a very limited total number of components. The technical task specified and the objects specified are substantially achieved by a brake pump according to appended claims.

From the point of view of its general structure, the brake pump is indicated with the numerical reference "1" in the attached figures, which in turn depict:

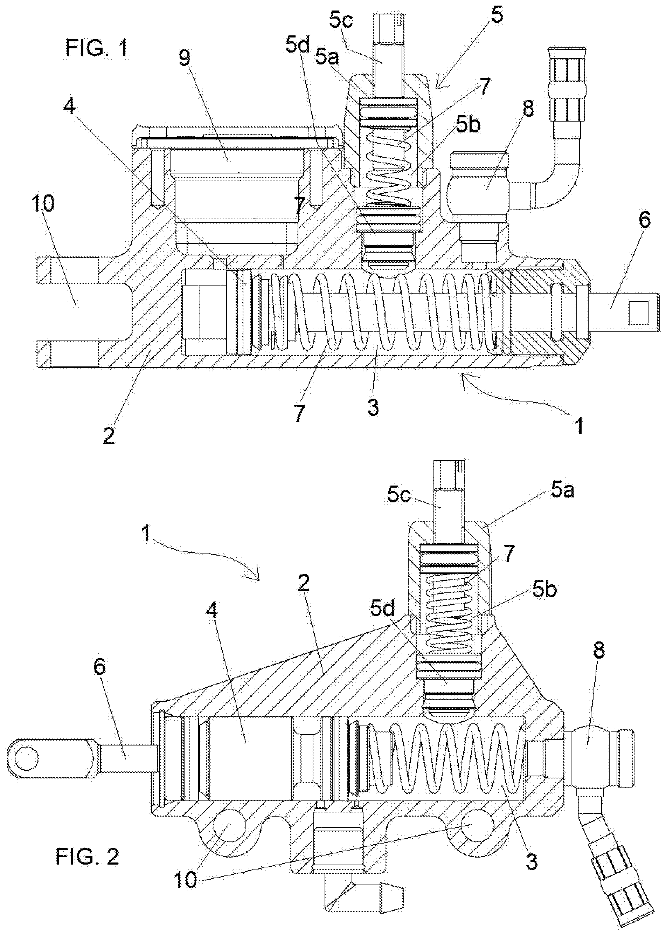

- Figure 1, a sectional view of an embodiment of the brake pump according to the invention (in a configuration such that it can be associated with a brake pedal working according to a kinematic scheme known in the technical field under the name "traction"); and
- Figure 2, a sectional view of a further embodiment of the brake pump according to the invention (in a configuration such that it can be associated with a brake pedal working according to a kinematic scheme known in the technical field under the name "compression").

Structurally speaking, the pump 1 can be installed (but not limitedly) on "go-karts" or similar vehicles, and can be used to brake wheels belonging to a single axle, such as the rear axle - in go-karts with relatively modest performance - or even the two front semi-axles (steering), where two brake callipers can be present (on high-performance go-karts), each of which is used on a single front wheel.

The brake pump object of the invention first comprises a pump body 2 connectable to a braking system of a vehicle (and said braking system will in turn be operated by an operator of the vehicle itself) as well as a main actuation chamber 3 obtained in the pump body 2 (said main actuation chamber 3 is adapted to contain a fluid usable to actuate a braking element of the braking system, i.e. a brake calliper, according to the current definition in this technical field).

The main actuation chamber 3 defines a main actuation volume having a fixed value, and it has a main slider 4 therein (which is therefore movably engaged in the main actuation chamber 3) adapted to generate, by the displacements thereof inside said main actuation volume, a pressure usable to operate the aforementioned braking element.

Conveniently, the present invention further comprises at least one volumetric variation chamber 5 in fluid connection with the main actuation chamber 3 and adapted to determine, in a determinable and selectable manner by an operator, a multiplicity of different values of an overall implementation volume (for the purposes of the present invention, it is therefore understood that the aforementioned "overall implementation volume" is composed of the sum or combination of the main implementation volume - which is fundamentally invariant over time - and a corresponding multiplicity of variable implementation volumes defined by the volumetric variation chamber 5 itself, which is therefore modifiable in geometric and/or volumetric terms).

From the functional point of view, it should therefore be noted that the variation of the overall "working" volume of the brake pump 1 implies a proportionality relationship (inverse) with the maximum braking pressure which can be expressed by the brake pump 1: when, for example, the volume of the chamber 5 is adjusted to its maximum, the "absolute" braking pressure obtainable by the brake pump 1 is minimal and, conversely, when the volume of the chamber 5 is adjusted to its minimum, the "absolute" braking pressure obtainable by the brake pump is maximum.

For the purposes of understanding the present invention, it must be clarified that the expression "absolute braking pressure" is intended to mean the maximum pressure obtainable from the brake pump 1 in a geometric-volumetric configuration: such a maximum pressure obtainable is obviously to be understood in conditions of maximum operation of the brake control, and therefore it can also be understood that for each possible selection or determination of the overall actuation volume of the brake pump 1, correlation curves can be determined between brake control operation and pressure "in output" from the brake pump itself (and such correlation curves will gradually be translated to greater values as the overall actuation volume decreases).

With reference to the attached figures, it should now be noted that the volumetric variation chamber 5 comprises a delimitation body 5a connectable to the pump body 2; the delimitation body 5a defines in cooperation with the latter a cavity 5b connected to the main actuation chamber 3, to which suitable dimensional variation means 5c are connected so as to make it possible to selectively define a multiplicity of volumetric/dimensional variations of the cavity 5b.

In turn, the dimensional variation means 5c can be made with different structural architectures depending on the requirements of the moment, and in an embodiment of the invention can, for example, comprise an internal delimitation element 5d movable inside the cavity 5b and a kinematic adjustment mechanism connected to such an internal delimitation element 5d, so as to be able to position it in a plurality of internal positions in the cavity 5b: conveniently, the aforementioned plurality of internal positions of the internal delimitation element 5d will correspond to a plurality of volumetric/dimensional variations of the cavity 5b.

Again with reference to the figures, it should be noted that the kinematic adjustment mechanism can comprise a threaded element inserted through the delimitation body 5a (for example, at a top portion of the delimitation body 5a itself), a thread obtained in the delimitation body 5a (not shown in the figures) and adapted to couple with such a threaded element and finally an auxiliary slider 5d connected to the threaded element and selectively positionable in the cavity 5b by screwing and/or unscrewing the threaded element with respect to the thread.

In order to correctly translate the necessary pressure to the braking elements of the system (braking), the brake pump 1 according to the invention further comprises a kinematic operation mechanism 6 (for example, a control rod connectable to a kinematic chain which can be connected to a brake lever or to a brake pedal which can be operated by a vehicle operator) associated with the pump body 2 and the main slider 4 to move it inside the main actuation chamber 3: such a kinematic operation mechanism 6 comprises, in the example embodiment in the figures, a translation element associated with the main slider 4 and associable, typically at an opposite end thereof to the main slider 4, to a brake operation control or to a brake return and control kinematic chain.

Always in order to ensure a correct usability of the brake pump 1, there can further be return means 7 associated with the main slider 4 and/or the auxiliary slider 5d: as shown in the figures, an example of such return means 7 can consist in the fact that they are means with an elastic return effect and typically of helical and/or axial springs.

For a correct connection with the braking system, the brake pump 1 can comprise suitable fluid pressurization means 8 as well as fluid delivery means 9, which are hydraulically or pneumatically connected at least to the main actuation chamber 3 and are functionally adapted to connect the pump 1 to the braking system according to the current technologies and/or according to the most common manufacturing standards.

Also in order to ensure a correct installation of the brake pump 1 on a vehicle or in association with a braking system, the pump can comprise appropriate constraint means 10 (which in turn can be flanges, slots, protrusions or fixing seats of suitable shape and size for the purpose) adapted to connect at least the pump body 2 to a frame of a vehicle and/or to a braking system of a vehicle.

A further part of the invention is a vehicle, typically of the "go-kart" type or the like, comprising:
- a frame having a predefined number of wheels (in turn "resident" on a corresponding number of axles and typically comprising at least one front wheel and at least one rear wheel);
- a braking system activatable on at least one of the aforementioned wheels, and according to a preferred embodiment of the invention, activatable on wheels connected to a predetermined axle; and
- at least one brake pump 1 active on a single axle of such a vehicle, which will be advantageously of the type in accordance with what has been described so far and/or with what is claimed below.

The brake pump described above - and claimed below - overcomes the drawbacks of the prior art described in the introduction of the present disclosure.

In fact, the coexistence of the internal chambers in the pump body and the variability of the overall internal volume of these intercommunicating chambers makes adjusting the actual pressure output from the pump itself easy, immediate and very accurate: moreover, such a process can be carried out in a reversible and repeated manner for a number of cycles which is substantially "infinite" with respect to the maximum structural life of the pump body itself (thus ensuring a high functionality of the brake pump which is constant throughout its period of use).

Furthermore, the integrated nature of the pump body and the simplicity of the components which allow for the adjustment/variation/selection of the overall internal volume of the pump body itself make the entire construction of the invention simple, fast, inexpensive and with an inherently very high degree of reliability.

Finally, it should be noted that the brake pump in accordance with the invention can be mounted on different types of go-karts (competition or "rental") and be indifferently assigned to the braking of the rear wheel axle or the front wheel-semi-axle, serving, according to the needs of the moment, a single brake calliper (or jaw) or a pair of callipers/jaws and constantly offering both a maximum adequate braking power and the possibility of adjusting and decreasing it (and, of course, of re-increasing it at the complete discretion of the vehicle user).

## Claims

1. Brake pump (1) for vehicles, preferably of the "go-kart" type or the like, comprising:
- a pump body (2) connectable to a braking system of a vehicle, said braking system being operable by an operator of said vehicle;
- a main actuation chamber (3) obtained in said pump body (2) and adapted to contain a fluid usable to operate a braking element of said braking system, said main actuation chamber (3) defining a main actuation volume having a fixed value; and
- a main slider (4) movably engaged in said main actuation chamber (3) and adapted to generate, by its displacements inside said main actuation volume, a pressure usable to operate said braking element,
**characterized in that** it further comprises at least one volumetric variation chamber (5) in fluid connection with the main actuation chamber (3) and adapted to determine a multiplicity of different values of an overall actuation volume, said overall actuation volume consisting of said main actuation volume and a corresponding multiplicity of variable actuation volumes defined by the volumetric variation chamber (5) itself.

2. Pump according to claim 1, wherein the volumetric variation chamber (5) comprises:
- a delimitation body (5a) connectable to the pump body (2) and defining in cooperation with the latter a cavity (5b) connected to the main actuation chamber (3); and
- dimensional variation means (5c) connected to said delimitation body (5a) and adapted to define a multiplicity of volumetric/dimensional variations of said cavity (5b) connected to the main actuation chamber.

3. Pump according to claim 2, wherein said dimensional variation means (5c) comprise:
- an internal delimitation element (5d) movable inside the cavity (5b); and
- a kinematic adjustment mechanism connected to said internal delimitation element (5d) and adapted to position it in a plurality of internal positions in the cavity (5b), said plurality of internal positions of the internal delimitation element (5d) corresponding to said multiplicity of volumetric/dimensional variations of the cavity (5b).

4. Pump according to claim 3, wherein said kinematic adjustment mechanism comprises:
- a threaded element inserted through the delimitation body (5a), preferably at a top portion of the delimitation body (5a) itself;
- a thread formed in the delimitation body (5a) and adapted to couple with said threaded element; and
- an auxiliary slider (5d) connected to the threaded element and selectively positionable in the cavity (5b) by screwing and/or unscrewing the threaded element with respect to the thread.

5. Pump according to any one of the preceding claims, wherein a kinematic operation mechanism (6) is further present, associated with the pump body (2) and the main slider (4) to move it inside the main actuation chamber (3).

6. Pump according to claim 5, wherein said kinematic operation mechanism (6) comprises a translation element associated with the main slider (4) and associable, preferably at an end thereof opposite the main slider (4), to a brake operation control or to a brake return and control kinematic chain.

7. Pump according to any one of the preceding claims, wherein return means (7) are further present, associated with the main slider (4) and/or the auxiliary slider (5d), said return means (7) preferably being of elastic type and even more preferably comprising helical and/or axial springs.

8. Pump according to any of the preceding claims, wherein there are further present:
- fluid pressurization means (8); and
- fluid delivery means (9),
hydraulically or pneumatically connected at least to the main actuation chamber (3) and adapted to circuitally connect the pump (1) to said braking system of said vehicle.

9. Pump according to any one of the preceding claims, wherein constraining means (10) are further present, adapted to connect at least the pump body (2) to a frame of a vehicle and/or to a braking system of a vehicle.

10. Vehicle, preferably of the "go-kart" type or the like, comprising:
- a frame having a predefined number of wheels, said wheels being arranged on a corresponding number of axles and preferably comprising at least one front wheel and at least one rear wheel;
- a braking system activatable on at least one of said wheels, and preferably on wheels connected to a predetermined axle; and
- at least one brake pump (1) active on a single axle of said vehicle,
**characterized in that** it comprises at least one brake pump (1) of the type according to any one of the preceding claims.

## Patentansprüche

1. Bremspumpe (1) für Fahrzeuge, vorzugsweise des Typs "Go-Kart" oder dergleichen, umfassend:
- einen Pumpenkörper (2), der mit einem Bremssystem eines Fahrzeugs verbindbar ist, wobei das Bremssystem von einem Bediener des Fahrzeugs betrieben werden kann;
- eine Hauptbetätigungskammer (3), die in dem Pumpenkörper (2) erhalten ist und dazu ausgelegt ist, ein Fluid zu enthalten, das zum Betrieb eines Bremselements des Bremssystems verwendet werden kann, wobei die Hauptbetätigungskammer (3) ein Hauptbetätigungsvolumen mit einem festen Wert definiert; und
- einen Hauptschieber (4), der beweglich in die Hauptbetätigungskammer (3) eingreift und dazu ausgelegt ist, durch seine Verschiebungen innerhalb des Hauptbetätigungsvolumens einen Druck zu erzeugen, der zum Betrieb des Bremselements verwendet werden kann,
**dadurch gekennzeichnet, dass** sie ferner mindestens eine volumetrische Variationskammer (5) umfasst, die in Fluidverbindung mit der Hauptbetätigungskammer (3) steht und dazu ausgelegt ist, eine Mehrzahl unterschiedlicher Werte eines Gesamtbetätigungsvolumens zu bestimmen, wobei das Gesamtbetätigungsvolumen aus dem Hauptbetätigungsvolumen und einer entsprechenden Mehrzahl variabler Betätigungsvolumina besteht, die durch die volumetrische Variationskammer (5) selbst definiert sind.

2. Pumpe nach Anspruch 1, wobei die volumetrische Variationskammer (5) Folgendes umfasst:
- einen Begrenzungskörper (5a), der mit dem Pumpenkörper (2) verbindbar ist und im Zusammenwirken mit diesem einen Hohlraum (5b) definiert, der mit der Hauptbetätigungskammer (3) verbunden ist; und
- Dimensionsvariationsmittel (5c), die mit dem Begrenzungskörper (5a) verbunden und dazu ausgelegt sind, eine Mehrzahl von volumetrischen/Dimensionensvariationen des Hohlraums (5b) zu definieren, der mit der Hauptbetätigungskammer verbunden ist.

3. Pumpe nach Anspruch 2, wobei die Dimensionensvariationsmittel (5c) Folgendes umfassen:
- ein inneres Begrenzungselement (5d), das innerhalb des Hohlraums (5b) beweglich ist; und
- einen kinematischen Einstellmechanismus, der mit dem inneren Begrenzungselement (5d) verbunden und dazu ausgelegt ist, es in einer Vielzahl von inneren Positionen in dem Hohlraum (5b) zu positionieren, wobei die Mehrzahl von inneren Positionen des inneren Begrenzungselements (5d) der Vielzahl von volumetrischen/Dimensionsvariationen des Hohlraums (5b) entspricht.

4. Pumpe nach Anspruch 3, wobei der kinematische Einstellmechanismus Folgendes umfasst:
- ein Gewindeelement, das durch den Begrenzungskörper (5a), vorzugsweise an einem oberen Abschnitt des Begrenzungskörpers (5a) selbst, eingeführt wird;
- ein im Begrenzungskörper (5a) ausgebildetes Gewinde, das ausgelegt ist, um mit dem Gewindeelement zu koppeln; und
- einen Hilfsschieber (5d), der mit dem Gewindeelement verbunden ist und durch Verschrauben und/oder Lösen des Gewindeelements in Bezug auf das Gewinde selektiv in dem Hohlraum (5b) positioniert werden kann.

5. Pumpe nach einem der vorhergehenden Ansprüche, wobei ferner ein kinematischer Betriebsmechanismus (6) vorhanden ist, der mit dem Pumpenkörper (2) und dem Hauptschieber (4) assoziiert ist, um diesen innerhalb der Hauptbetätigungskammer (3) zu bewegen.

6. Pumpe nach Anspruch 5, wobei der kinematische Betriebsmechanismus (6) ein Translationselement umfasst, das mit dem Hauptschieber (4) assoziiert ist und vorzugsweise an seinem dem Hauptschieber (4) gegenüberliegenden Ende mit einer Bremsbetriebssteuerung oder einer Bremsrückstell- und Steuerungskinematikkette assoziiert werden kann.

7. Pumpe nach einem der vorhergehenden Ansprüche, wobei ferner Rückstellmittel (7) vorhanden sind, die mit dem Hauptschieber (4) und/oder dem Hilfsschieber (5d) assoziiert sind, wobei die Rückstellmittel (7) vorzugsweise vom elastischen Typ sind und noch bevorzugter Spiral- und/oder Axialfedern umfassen.

8. Pumpe nach einem der vorhergehenden Ansprüche, wobei zudem vorhanden sind:
- Fluiddruckbeaufschlagungsmittel (8); und
- Fluidabgabemittel (9),
die hydraulisch oder pneumatisch mindestens mit der Hauptbetätigungskammer (3) verbunden und ausgelegt ist, um die Pumpe (1) mit dem Bremssystem des Fahrzeugs schaltungstechnisch zu verbinden.

9. Pumpe nach einem der vorhergehenden Ansprüche, wobei ferner Zwangsmittel (10) vorhanden sind, die dazu ausgelegt sind, zumindest den Pumpenkörper (2) mit einem Rahmen eines Fahrzeugs und/oder mit einem Bremssystem eines Fahrzeugs zu verbinden.

10. Fahrzeug, vorzugsweise des Typs "Go-Kart" oder dergleichen, umfassend:
- einen Rahmen mit einer vordefinierten Anzahl von Rädern, wobei die Räder auf einer entsprechenden Anzahl von Achsen angeordnet sind und vorzugsweise mindestens ein Vorderrad und mindestens ein Hinterrad umfassen;
- ein Bremssystem, das an mindestens einem der Räder und vorzugsweise an Rädern, die mit einer vorbestimmten Achse verbunden sind, aktiviert werden kann; und
- mindestens eine Bremspumpe (1), die auf eine einzige Achse des Fahrzeugs aktiv ist, **dadurch gekennzeichnet, dass** sie mindestens eine Bremspumpe (1) des Typs nach einem der vorhergehenden Ansprüche umfasst.

## Revendications

1. Pompe de frein (1) pour véhicules, de préférence du type « kart » ou similaire, comprenant :
- un corps de pompe (2) pouvant être raccordé au système de freinage d'un véhicule, ledit système de freinage pouvant être actionné par un opérateur dudit véhicule ;
- une chambre d'actionnement principale (3) obtenue dans ledit corps de pompe (2) et conçue pour contenir un fluide pouvant être utilisé pour actionner un élément de freinage dudit système de freinage, ladite chambre d'actionnement principale (3) définissant un volume d'actionnement principal ayant une valeur fixe ; et
- un coulisseau principal (4) en prise de façon mobile dans ladite chambre d'actionnement principal (3) et conçu pour générer, par ses déplacements à l'intérieur dudit volume d'actionnement principal, une pression pouvant être utilisée pour actionner ledit élément de freinage,
**caractérisée en ce qu'**elle comprend également au moins une chambre de variation volumétrique (5) en liaison fluidique avec la chambre d'actionnement principale (3) et conçue pour déterminer une multiplicité de valeurs différentes d'un volume d'actionnement global, ledit volume d'actionnement global étant constitué dudit volume d'actionnement principal et d'une multiplicité correspondante de volumes d'actionnement variables définis par la chambre de variation volumétrique (5) elle-même.

2. Pompe selon la revendication 1, dans laquelle la chambre de variation volumétrique (5) comprend :
- un corps de délimitation (5a) pouvant être raccordé au corps de pompe (2) et définissant, en coopération avec ce dernier, une cavité (5b) raccordée à la chambre d'actionnement principale (3) ; et
- des moyens de variation dimensionnelle (5c) raccordés audit corps de délimitation (5a) et conçus pour définir une multiplicité de variations volumétriques/dimensionnelles de ladite cavité (5b) raccordée à la chambre d'actionnement principale.

3. Pompe selon la revendication 2, dans laquelle lesdits moyens de variation dimensionnelle (5c) comprennent :
- un élément de délimitation interne (5d) mobile à l'intérieur de la cavité (5b) ; et
- un mécanisme d'ajustement cinématique raccordé audit élément de délimitation interne (5d) et conçu pour le positionner dans une pluralité de positions internes dans la cavité (5b), ladite pluralité de positions internes de l'élément de délimitation interne (5d) correspondant à ladite multiplicité de variations volumétriques/dimensionnelles de la cavité (5b).

4. Pompe selon la revendication 3, dans laquelle ledit mécanisme d'ajustement cinématique comprend :
- un élément fileté inséré à travers le corps de délimitation (5a), de préférence dans une partie supérieure du corps de délimitation (5a) lui-même ;
- un filetage formé dans le corps de délimitation (5a) et conçu pour s'accoupler avec ledit élément fileté ; et
- un coulisseau auxiliaire (5d) raccordé à l'élément fileté et pouvant être positionné sélectivement dans la cavité (5b) en vissant et/ou dévissant l'élément fileté par rapport au filetage.

5. Pompe selon l'une quelconque des revendications précédentes, dans laquelle un mécanisme de fonctionnement cinématique (6) est également présent, associé au corps de pompe (2) et au coulisseau principal (4) pour le déplacer à l'intérieur de la chambre d'actionnement principale (3).

6. Pompe selon la revendication 5, dans laquelle ledit mécanisme de fonctionnement cinématique (6) comprend un élément de translation associé au coulisseau principal (4) et associable, de préférence à une extrémité de celui-ci opposée au coulisseau principal (4), à une commande de fonctionnement de frein ou à une chaîne cinématique de retour et de commande de frein.

7. Pompe selon l'une quelconque des revendications précédentes, dans laquelle des moyens de rappel (7) sont également présents, associés au coulisseau principal (4) et/ou au coulisseau auxiliaire (5d), lesdits moyens de rappel (7) étant de préférence de type élastique et comprenant encore plus préférentiellement des ressorts hélicoïdaux et/ou axiaux.

8. Pompe selon l'une quelconque des revendications précédentes, dans laquelle sont également présents :
- des moyens de pressurisation de fluide (8) ; et
- des moyens d'acheminement de fluide (9),
raccordés hydrauliquement ou pneumatiquement au moins à la chambre d'actionnement principale (3) et conçus pour raccorder en circuit la pompe (1) audit système de freinage dudit véhicule.

9. Pompe selon l'une quelconque des revendications précédentes, dans laquelle des moyens de contrainte (10) sont également présents, conçus pour raccorder au moins le corps de pompe (2) au châssis d'un véhicule et/ou au système de freinage d'un véhicule.

10. Véhicule, de préférence du type « kart » ou similaire, comprenant :
- un châssis comportant un nombre prédéfini de roues, lesdites roues étant disposées sur un nombre correspondant d'essieux et comprenant de préférence au moins une roue avant et au moins une roue arrière ;
- un système de freinage activable sur au moins l'une desdites roues, et de préférence sur les roues raccordées à un essieu prédéterminé ; et
- au moins une pompe de frein (1) active sur un seul essieu dudit véhicule, **caractérisé en ce qu'**il comprend au moins une pompe de frein (1) du type selon l'une quelconque des revendications précédentes.
